# EUROPÄISCHE PATENTSCHRIFT

(11) **EP 3 130 506 B1**
(45) Veröffentlichungstag und Bekanntmachung des Hinweises auf die Patenterteilung: **23.10.2019**
(21) Anmeldenummer: 16183970.9
(22) Anmeldetag: 12.08.2016
(51) Int. Cl.: B60P 1/04, B62D 33/02, B60P 1/28

(54) **LADEBRÜCKE**
LOADING BRIDGE
PASSERELLE DE CHARGEMENT

(30) Priorität: 12.08.2015 DE 202015104256 U
(43) Veröffentlichungstag der Anmeldung: 15.02.2017
(73) Patentinhaber: Humbaur Holding GmbH & Co. KG, 86368 Gersthofen (DE)
(72) Erfinder: Humbaur, Ulrich, 86368 Gersthofen (DE)
(74) Vertreter: Ernicke, Klaus Stefan

(56) Entgegenhaltungen:
- EP-A1- 0 471 325
- AT-B- 364 257
- DE-A1- 3 618 420
- DE-A1- 3 816 879
- DE-A1- 3 933 673
- DE-T2- 69 806 569
- DE-U1-202007 006 475
- JP-A- H10 338 173

## Beschreibung

Die Erfindung betrifft eine Ladebrücke für eine Fahrzeug mit den Merkmalen im Oberbegriff des Hauptanspruchs.

Aus der Praxis sind Ladebrücken mit einem Brückenrahmen und einer üblicher Weise aus Holz bestehenden Bodenplatte bekannt. Ferner ist es bekannt, die Holzplatte mit einer aufgelegten ebenen Metallplatte abzudecken. Die EP 0 471 325 A1 zeigt eine Ladebrücke mit dem Merkmalen des Oberbegriffs von Anspruch 1. Weitere ähnliche Ladebrücken sind aus der DE 39 22 673 A1 und der De 36 18 420 A1 bekannt.

Es ist Aufgabe der vorliegenden Erfindung, eine verbesserte Ladebrücke aufzuzeigen.

Die Erfindung löst diese Aufgabe mit den Merkmalen im Hauptanspruch.

Die beanspruchte Ladebrücke hat den Vorteil, dass eine sichere Auflage, Abstützung und Führung der Bodenplatte auf mehreren Rahmenträgern auf einfache und kostengünstige Weise gebildet werden kann. Die Bodenplatte kann mit einem nach unten abgewinkelten, vorzugsweise abgebogenen, Plattenrand formschlüssig an Rahmenträgern geführt sein. Vorzugsweise erfolgt diese formschlüssige Führung an der Oberseite von Rahmenträgern und in einer dortigen Aufnahmenut. Die Bodenplatte braucht dann nur noch in geeigneter Weise befestigt zu werden, z.B. durch Niete oder dergleichen. Der abgewinkelte Plattenrand kann umlaufend, ggf. unter Aussparung der Eckbereiche, angeordnet sein. Die Bodenplatte kann einstückig oder mehrstückig ausgebildet sein.

Der Brückenrahmen ist vorzugsweise als Leiterrahmen ausgebildet und weist mehrere Rahmenträger auf, die längs und quer zu seiner Längsachse ausgerichtet sind. Diese Rahmenträger werden gemäß ihrer Ausrichtung als Längs- und Querträger bezeichnet.

Vorzugsweise liegt die Bodenplatte auf sog. Querträgern auf und ist zumindest an einem Teil von diesen Querträgern in den besagten Aufnahmenuten formschlüssig geführt.

In einer vorteilhaften Ausführungsform beinhaltet der Brückenrahmen mehrere innere, stützende Rahmenträger, insbesondere Querträger, die an der Oberseite die besagte Aufnahmenut für den längs gerichteten Plattenrand aufweisen. Ferner können die inneren, stützenden Rahmenträger eine Stützkontur aufweisen, die z.B. wellenförmig gestaltet ist und an die Aufnahmenut zum Trägerende hin anschließt.

Der Brückenrahmen kann äußere Rahmenträger, insbesondere Längs- und Querträger, aufweisen, welche außenseitig an die Plattenränder dicht anschließen. Sie können einen die Bodenplatte umlaufend umschließenden Außenrahmen bilden. Die Oberseite der Bodenplatte und der Rahmenträger bzw. des Außenrahmens liegen vorzugsweise im Wesentlichen auf gleicher Höhe. Hierdurch kann eine im Wesentlichen ebene und durch eine schmale Fugenbildung weitestgehend dichte Ladefläche gebildet werden. Die durch den Außenrahmen vergrößerte und ebene Ladefläche kann vielseitig und für unterschiedliche Ladungen und Güter genutzt werden. Zudem können die Ladungen auf der Ladefläche behinderungsfrei verschoben werden. Ein oder mehrere äußere Rahmenträger können an der Oberseite ein längs laufende Nut aufweisen, an der ggf. Zurröffnungen und/oder Zurrbügel angeordnet sind.

Ein oder mehrere äußere, insbesondere längs gerichtete, Rahmenträger können an der zur Bodenplatte gerichteten Seite eine abgebogene Stufe aufweisen, die im Bereich der Aufnahmenut angeordnet ist und an den Plattenrand angrenzt. Am freien Ende der Stufe kann ein abgebogener Flansch angeordnet sein. Die abgewinkelten bzw. abgebogenen Plattenränder können an der abgesenkten Stufe der äußeren Rahmenträger geführt sein. Die Stufe kann ebenfalls in der Aufnahmenut aufgenommen sein. Dies stabilisiert und sichert den Verbund. Ein oder mehrere äußere, insbesondere quer gerichtete, Rahmenträger können an der zur Bodenplatte gerichteten Seite einen abgewinkelten Stützflansch aufweisen.

Die beanspruchte Ladebrücke eignet sich besonders als Kippbrücke für den Transport von abkippfähigen Gütern, insbesondere Schüttgütern. Am Brückenrahmen kann ein Kipplager angeordnet sein. Die Ladebrücke kann eine oder mehrere feste oder bewegliche seitliche Bordwände oder Aufbauwände aufweisen.

Eine bevorzugt aus Metall bestehende Bodenplatte hat den Vorteil, dass sie mechanisch widerstandsfähig und verschleißarm ist. Durch die formschlüssige Führung kann sie direkt auf den besagten Rahmenträgern aufgelegt, formschlüssig geführt oder befestigt werden. Die beanspruchte Ladebrücke hat dadurch eine hohe Festigkeit und Betriebssicherheit verbunden mit einem geringen Bau- und Kostenaufwand.

Die Aufnahmenuten für den Plattenrand sind vorzugsweise an einem über den Rand der Bodenplatte hinausreichenden Endbereich von Rahmenträgern, insbesondere Querträgern, angeordnet, der eine Ausklinkung bzw. eine Stufenbildung an der Trägeroberseite aufweisen. Hier kann einerseits die Aufnahmenut für die formschlüssige Führung der Bodenplatte und andererseits die außenseitig anschließende Stützkontur für einen äußeren Rahmenträger, insbesondere einen Längsträger, gebildet werden. Die Ausklinkung bzw. Stufenbildung ist zur Aufnahme des äußeren Rahmenträgers mit der besagten höhengleichen Anordnung zur Bodenplatte vorteilhaft. Die Stützkontur kann an die Formgebung des hier aufliegenden Rahmenträgers angepasst sein. Sie kann diesen abstützen und formschlüssig führen. Ein oder mehrere äußere, insbesondere längs gerichtete, Rahmenträger können ein mehrfach abgewinkeltes schalenförmiges und seitlich offenes Querschnittsprofil aufweisen.

Dies erleichtert die Positionierung, Führung und gegenseitige Verbindung der Rahmenträger untereinander und mit der Bodenplatte. Die Verbindung der Rahmenträger erfolgt vorzugsweise durch Schweißen. Die besagten Formanpassungen haben außerdem Vorteile für eine Senkung des Fertigungsaufwands und der Herstellkosten.

In einer vorteilhaften Ausführungsform weisen mehrere innere, stützende Rahmenträger, insbesondere Querträger, ein umgedrehtes U-förmiges Querschnittsprofil mit Seitenstegen und einem oben liegenden Mittelsteg auf. Der Mittelsteg kann an der Aufnahmenut bzw. Ausklinkung enden. Die Aufnahmenut und/oder die Stützkontur können an der Oberseite der dann frei liegenden Seitenstege angeordnet sein.

In den Unteransprüchen sind weitere vorteilhafte Ausgestaltungen der Erfindung angegeben.

Die Ladebrücke kann ferner ein oder mehrere folgende Ausgestaltungsmerkmale aufweisen. Diese können einzeln oder in beliebiger Kombination vorliegen.

Die Bodenplatte und/oder die Rahmenträger können aus Metall, insbesondere Stahl oder Leichtmetall, ausgebildet sein.

Mehrere innere, stützende Rahmenträger, insbesondere Querträger, können einen über den Plattenrand hinausreichenden Endbereich mit einer Ausklinkung aufweisen.

Die Aufnahmenut ist an der Ausklinkung angeordnet.

Mehrere innere, stützende Rahmenträger, insbesondere Querträger, stützen am Endbereich einen äußeren, insbesondere längs gerichteten Rahmenträger ab, wobei die Ausklinkung eine profilierte und angepasste Stützkontur aufweist.

Die inneren, bevorzugt quer gerichteten Rahmenträger können unterschiedliche Längen haben, wobei nur die längeren Rahmenträger eine Aufnahmenut und/oder Ausklinkung aufweisen.

Der Brückenrahmen kann mehrere innere, längs gerichtete Rahmenträger aufweist, auf denen innere, quer gerichtete Rahmenträger aufliegen.

Die Erfindung betrifft auch ein mit der beanspruchten Ladebrücke ausgerüstetes Fahrzeug. Das Fahrzeug ist bevorzugt als Anhänger ausgebildet, wobei es sich alternativ um ein Kraftfahrzeug handeln kann. Das Fahrzeug kann eine Kippeinrichtung für die Ladebrücke aufweisen.

Die Erfindung ist in den Zeichnungen beispielhaft und schematisch dargestellt. Im Einzelnen zeigen:
- Figur 1:: einen Anhänger mit Tandemachse und einer Ladebrücke in Kippstellung,
- Figur 2:: einen anderen einachsigen Anhänger mit einer abgeschwenkten Ladebrücke,
- Figur 3:: eine perspektivische Ansicht einer Ladebrücke mit einer Bodenplatte,
- Figur 4:: eine perspektivische Ansicht der Ladebrücke von Figur 3 ohne Bodenplatte und mit sichtbarem Brückenrahmen,
- Figur 5:: einen teilweise demontierten Brückenrahmen von Figur 4,
- Figur 6:: einen vergrößerten und abgebrochenen Eckbereich der Ladebrücke,
- Figur 7:: einen Querschnitt durch die Ladebrücke mit Blick auf das vordere Ende,
- Figur 8:: eine vergrößerte Darstellung des Details VIII von Figur 7,
- Figur 9:: eine abgebroche perspektivische Darstellung eines Rahmenträgers mit einer endseitigen Aufnahmenut und einer Stützkontur und
- Figur 10:: eine ausschnittsweise perspektivische Darstellung eines äußeren Querträgers mit einem Stützflansch für die Bodenplatte.

Die Erfindung betrifft eine Ladebrücke (2) für Fahrzeuge (1). Die Erfindung betrifft ferner ein Fahrzeug (1) mit einer solchen Ladebrücke.

Das Fahrzeug (1) ist vorzugsweise als Straßenfahrzeug, insbesondere als Anhänger ausgebildet. Alternativ kann es sich um ein beliebiges anderes Straßenfahrzeug handeln, insbesondere ein Kraftfahrzeug.

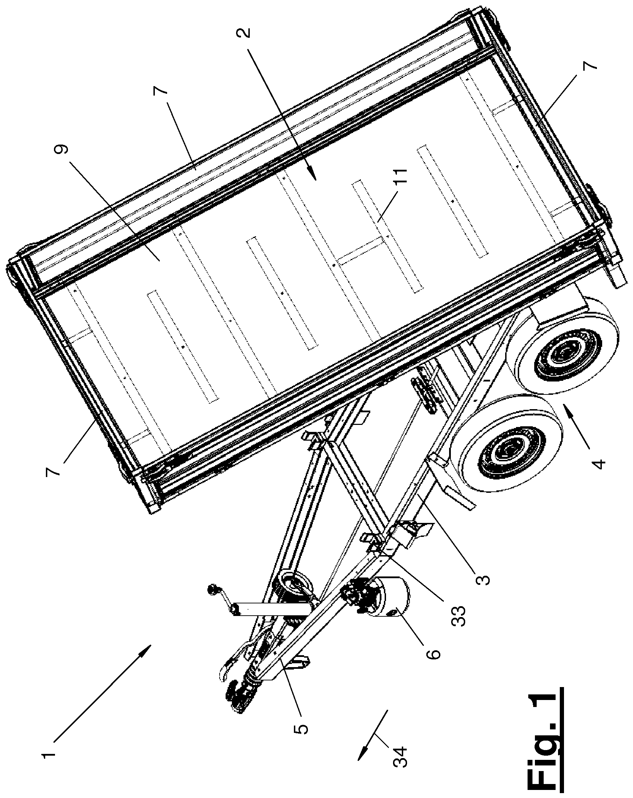

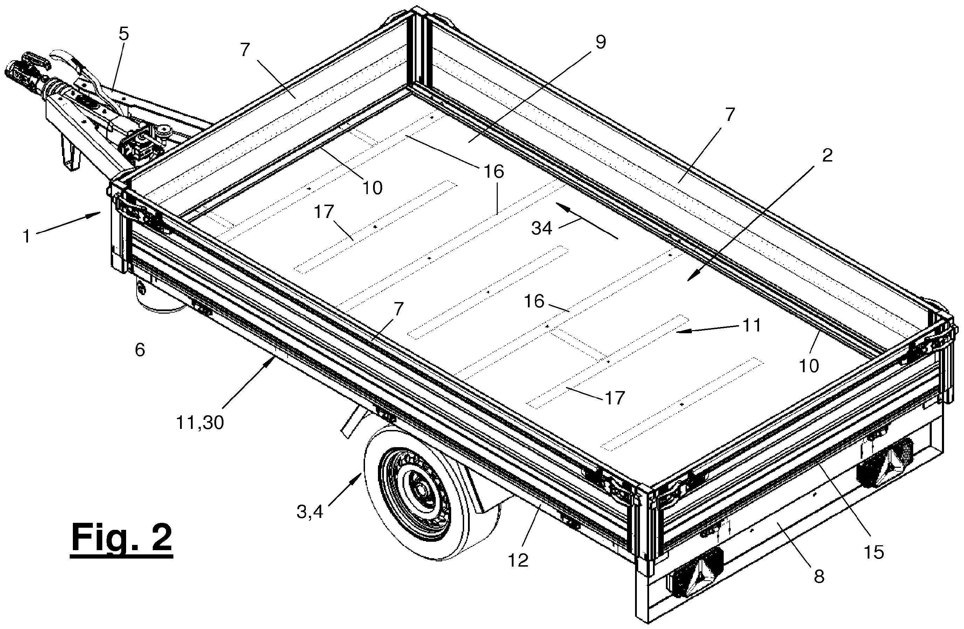

Die Ladebrücke (2) kann starr auf dem Fahrzeug (1) montiert sein. In der bevorzugten Ausführungsform ist sie als Kippbrücke ausgebildet. Figur 1 zeigt eine Kippbrücke (2) in einer aufgestellten Kippstellung. In Figur 2 ist die abgesenkte und im Wesentlichen horizontale Stellung dargestellt. Die Kippbrücke kann um eine oder mehrere längs und/oder quer zur Fahrzeuglängsachse (34) gerichtete Kippachsen schwenken. Sie kann auch um eine vom Heck distanzierte Querachse abgesenkt werden.

Der Anhänger (1) weist ein Fahrgestell oder Chassis (3) und ein Fahrwerk (4) mit einer, zwei oder mehr Achsen auf. Das Chassis (3) weist am vorderen Ende eine Zugeinrichtung (5) auf, die z.B. von einer starren V-Deichsel oder Rohrdeichsel und einer am vorderen Deichselende angeordneten Anhängerkupplung sowie einer Bremseinrichtung und ggf. einem Stützrad gebildet wird. Im Falle einer Kippbrücke (2) kann das Fahrzeug (1), insbesondere der Anhänger, eine Kippeinrichtung (6) aufweisen, die z.B. einen hydraulischen Hubzylinder und einen Tank sowie eine manuell oder motorisch betriebene Pumpe für das Hydrauliköl aufweist. Am Chassis (3) kann eine Brückenführung (33) angeordnet sein.

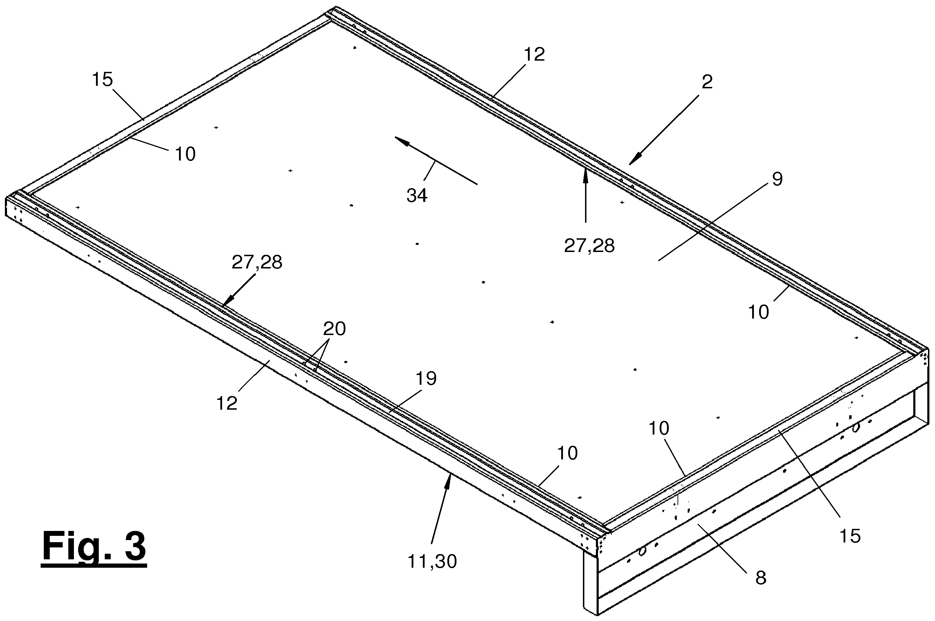

Die Ladebrücke (2) kann gemäß Figur 3 plattformartig ausgebildet sein. Sie kann alternativ gemäß Figur 1 und 2 an einer oder allen Seitenrändern eine feste oder bewegliche Bordwand (7) oder eine andere Art von Aufbauwand aufweisen. Auf der Ladebrücke (2) kann ansonsten auch ein anderer Aufbau, z.B. ein Kastenaufbau oder dergleichen angeordnet sein.

Die Ladebrücke (2) weist einen Brückenrahmen (11) und eine Bodenplatte (9) auf. Der Brückenrahmen (11) kann starr auf dem Chassis (3) eines Fahrzeugs (1) befestigt sein. Er kann alternativ über ein Kipplager (32) kippfähig mit dem Chassis (3) verbunden sein. Das Kipplager kann einzeln oder mehrfach vorhanden und an beliebigen Seiten des Chassis (3) bzw. der Ladebrücke (2) angeordnet sein. In Figur 2 ist ein Hinterkipper mit einem heckseitigen Kipplager dargestellt. Alternativ ist eine Ausbildung als Seitenkipper oder als Dreiseitenkipper oder als Absenkkipper möglich.

Der Brückenrahmen (11) ist als Leiterrahmen ausgebildet und besteht aus mehreren miteinander einander rechtwinklig kreuzenden und quer verbundenen, insbesondere verschweißten Rahmenträgern (12-17). Ein Teil der Rahmenträger (12-14) ist längs einer Längsachse (34) der Ladebrücke (2) ausgerichtet und wird nachfolgend als Längsträger bezeichnet. Ein anderer Teil der Rahmenträger (15-17) ist quer zur besagten Längsachse (34) ausrichtet und wird nachfolgend als Querträger bezeichnet. Die Längsachse (34) kann mit der Fahrtrichtung bzw. Längsachse des Fahrzeugs (1) zusammenfallen.

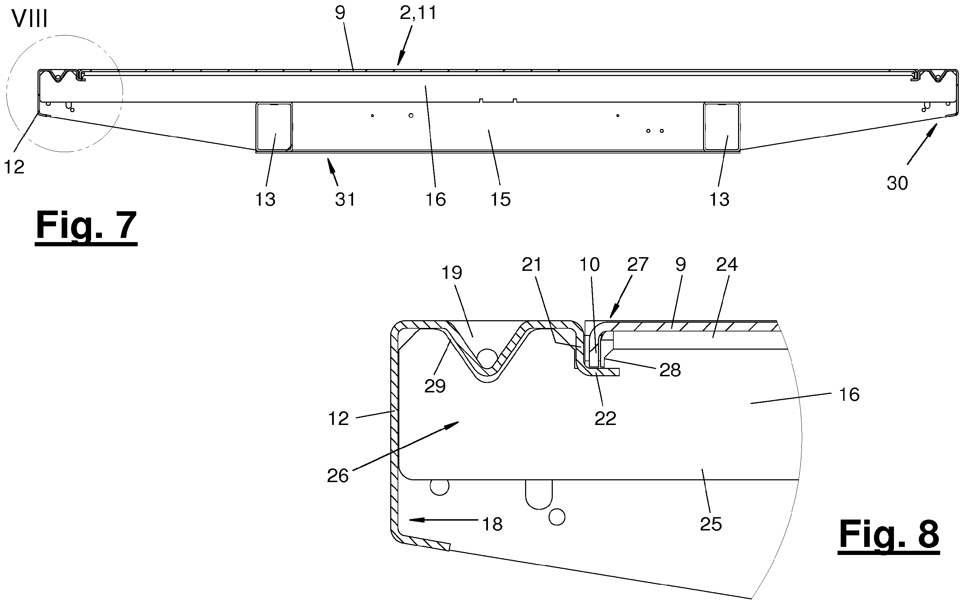

Die Bodenplatte ist im Wesentlichen eben ausgebildet und besitzt einen nach unten abgewinkelten Plattenrand (10). In der gezeigten und bevorzugten Ausführungsform ist der Plattenrand (10) von der Plattenfläche randseitig abgebogen. Hierbei wird eine in Figur 8 gezeigte runde Biegung bevorzugt. Der Plattenrand (10) ist im Wesentlichen senkrecht zur Bodenplatte (9) ausgerichtet. Er kann gemäß Figur 8 über die Plattenunterseite hinaus ragen.

In einer anderen Ausführungsform kann der Plattenrand (10) von leistenförmigen Zusatzteilen gebildet und mit der Bodenplatte (9) durch Schweißen oder auf andere geeignete Weise verbunden sein.

Die Bodenplatte (9) besteht vorzugsweise aus Metall, insbesondere aus Stahl oder Leichtmetall. Sie kann alternativ aus einem anderen geeigneten Werkstoff, beispielsweise Kunststoff oder einem Verbundwerkstoff bestehen. Die Bodenplatte (9) kann einstückig ausgebildet sein. Sie kann alternativ mehrstückig sein und von mehreren nebeneinander angeordneten und ggf. miteinander verbunden Plattensegmenten gebildet werden. Die Bodenplatte (9) kann z.B. gemäß Figur 7, 8 und 10 eben und dünnwandig sein. Sie kann alternativ in beliebig anderer Weise, z.B. als Strukturplatte, insbesondere als Hohlkammerplatte oder als Stegplatte, ausgebildet sein.

Die Bodenplatte (9) wird von mehreren Rahmenträgern (12-17) gestützt und liegt auf diesen auf. Sie ist dabei mit ihrem nach unten abgewinkelten bzw. abgebogenen Plattenrand (10) an zumindest einigen Rahmenträgern (12-17) formschlüssig geführt. Die formschlüssige Führung des Plattenrandes (10) kann durch einen Nuteneingriff bewirkt werden.

Die Bodenplatte (9) liegt in den gezeigten Ausführungsformen auf Querträgern (16,17) auf und ist zumindest an einem Teil von diesen Querträgern (16) mit dem abgewinkelten bzw. abgebogenen Plattenrand (10) in einer Aufnahmenut (28) formschlüssig geführt. Die Aufnahmenut (28) ist an der Oberseite der Querträger (16) angeordnet. Sie ist als vertikale Vertiefung ausgebildet. In Figur 1 und 2 sind die verborgen unter der Bodenplatte (9) liegenden Querträger (16,17) angedeutet.

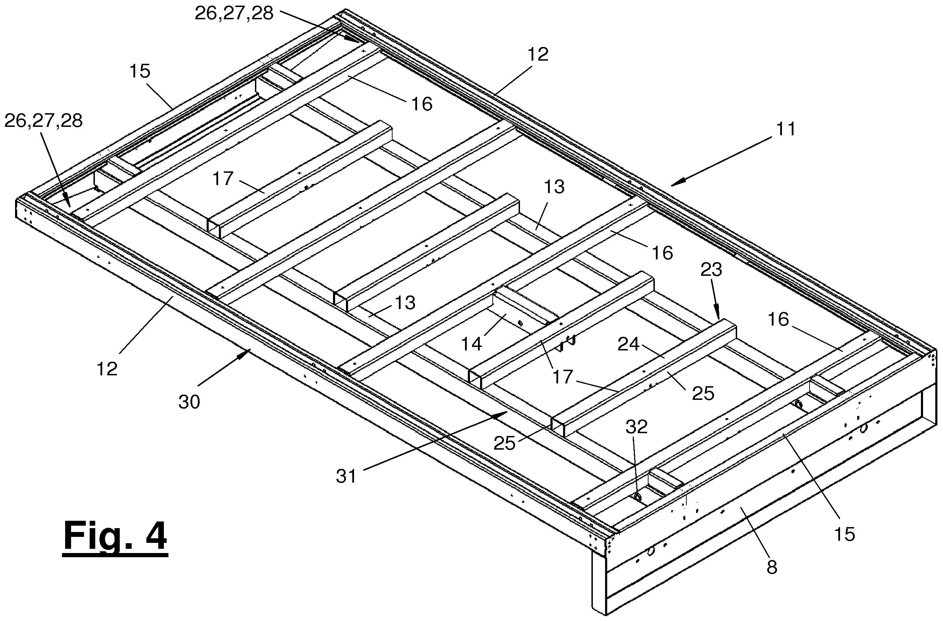

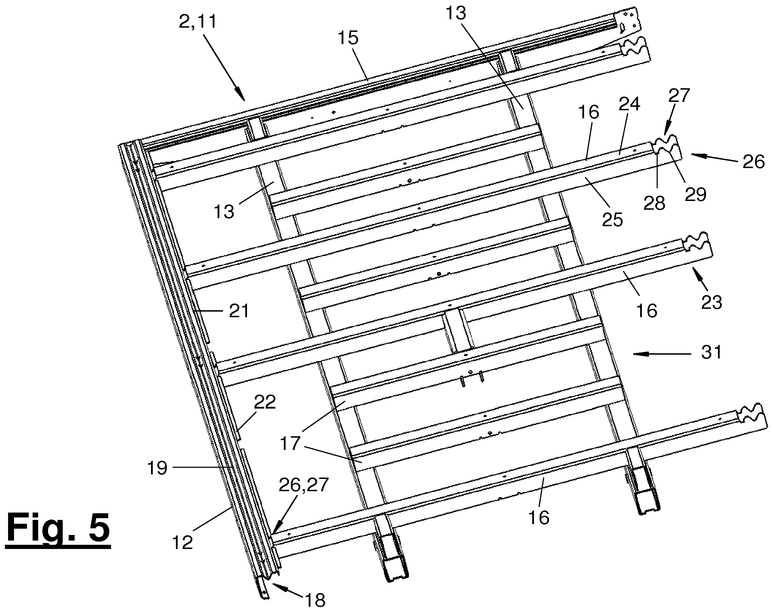

Die Querträger (16,17) können gemäß Figur 4 und 5 unterschiedliche Längen aufweisen. Bei der gezeigten Ausbildung des Brückenrahmens (11) liegen die Querträger (16,17) auf den innen liegenden, langen Längsträgern (13) auf. Die kürzeren Querträger (17) enden an den parallelen Längsträgern (13). Die langen Querträger (16) ragen beidseits über die Längsträger (13) hinaus. Ferner können ein oder mehrere kurze und im inneren Rahmenbereich liegende Längsträger (14) vorhanden sein. Hier kann z.B. bei einer Kippbrücke (2) der Hubzylinder angeschlossen werden. Die Längs- und Querträger (13,14,16,17) bilden einen Innenrahmen (31) des Brückenrahmens (11).

Ferner sind äußere Längsträger (12) und äußere Querträger (15) vorhanden, die miteinander verbunden sind und einen Außenrahmen (30) bilden. Der Außenrahmen (30) ist mit dem Innerahmen (31) fest verbunden. Der Außenrahmen (30) umschließt die Bodenplatte (9) bevorzugt umlaufend an allen vier Seiten. Die Bord- oder Aufbauwände (7) können am Außenrahmen (30) starr oder beweglich, insbesondere schwenkbar, befestigt sein.

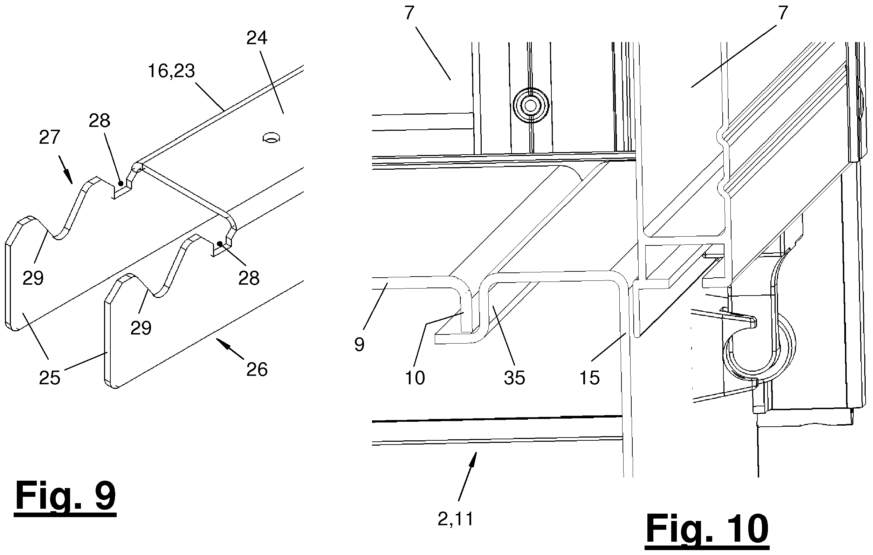

Wie Figur 5 und 9 verdeutlichen, tragen die längeren Querträger (16) an ihren beiden stirnseitigen Endbereichen (26) jeweils eine Ausklinkung (27). Diese ist an der Trägeroberseite angeordnet und ist als vertikales Profil mit einer oder mehreren Vertiefungen ausgebildet.

Die Querträger (16) weisen z.B. ein umgedrehtes, nach unten offenes, U-förmiges Querschnittsprofil (23) auf, welches von aufrechten, parallelen Seitenstegen (25) und einem oben liegenden, verbindenden Mittelsteg (24) gebildet wird. Der Mittelsteg (24) endet an bzw. vor den beiden endseitigen Ausklinkungen (27). Die Seitenstege (25) ragen jeweils endseitig über den verkürzten Mittelsteg (24) hinaus und weisen an ihrem oberen Stegrand die Ausklinkung (27) auf. Die kürzeren Querträger (17) können ebenfalls ein U-förmiges, umgedrehtes Querschnittsprofil (23) aufweisen.

Die Ausklinkungen (27) weisen die besagten Aufnahmenuten (28) auf, die direkt an das Ende des Mittelstegs (24) anschließen. Ferner weisen die Ausklinkungen (27) eine Stützkontur (29) auf, die z.B. wellenförmig gestaltet ist und an die Aufnahmenut (28) zum Trägerende hin anschließt. Die Aufnahmenut (28) und die Stützkontur (29) sind jeweils an der Oberseite der Seitenstege (25) angeordnet. Sie bilden lokale Vertiefungen und sind in Längsrichtung (34) gesehen deckungsgleich angeordnet. Die Ausklinkungen (27) an den aufgereihten langen Querträgern (16) und ihre Aufnahmenuten (28) und Stützkonturen (29) fluchten in Längsrichtung (34).

Die längeren Querträger (16) sind an ihren Endbereichen (26) mit den äußeren Längsträgern (12) verbunden und stützen diese ab. Die äußeren Längsträger (12) weisen z.B. ein in Figur 5, 7 und 8 dargestelltes Querschnittsprofil (18) auf, das mehrfach abgewinkelt und schalenförmig ausgebildet sowie seitlich offen ist. Die offene Profilseite ist jeweils zur Ladebrückeninnenseite gerichtet. Durch diese Profilöffnung ragen die Endbereiche (26) der Querträger (16) und untergreifen mit ihrer Stützkontur (29) die Oberseite des jeweiligen äußeren Längsträgers (12). Diese Trägeroberseite und die Stützkontur (29) sind in der Höhe profiliert und aneinander angepasst.

Die äußeren Längsträger (12) weisen an der Oberseite eine bevorzugt V-förmige Rinne oder Nut (19) auf, die sich über die gesamte oder einen Teil der Trägerlänge erstreckt. In der V-Nut (19) können ein oder mehrere Zurröffnungen (20) angeordnet sein, in die bedarfsweise Zurrbügel eingesteckt werden können.

Die äußeren Längsträger (12) weisen außerdem an dem zur Bodenplatte (9) gerichteten oberen Randbereich eine abgebogene Stufe (21) auf. Diese ist im montierten Zustand im Bereich der Aufnahmenuten (28) angeordnet und grenzt an den dort befindlichen Plattenrand (10) dicht an. Die Aufnahmenuten (28) können die Stufe (21) und den Plattenrand (10) aufnehmen und haben eine entsprechend große Weite.

Am freien Ende der Stufe (21) ist ein zur Brückeninnenseite abgebogener Flansch (22) angeordnet. Dieser untergreift mit geringem Abstand und dichtend das freie Ende des Plattenrands (10). Der Flansch (22) kann ggf. den Plattenrand (10) zusätzlich abstützen.

Figur 7 und 8 verdeutlichen diese Anordnung. Die Stufen (21) können bereichsweise geschlitzt sein und in diesen Schlitzbereichen die oberen Ränder der Seitenstege (25) aufnehmen. Figur 5 verdeutlicht in der linken Bildhälfte diese Ausbildung.

Die vorzugsweise im Wesentlichen ebene Bodenplatte (9) liegt auf der Oberseite der inneren Querstege (16,17), insbesondere auf deren Mittelstegen (24), plan auf und ist hier in geeigneter Weise befestigt. Beispielsweise sind die Mittelstege (24) und die Bodenplatte (9) an mehreren Stellen vernietet.

Die Oberseite der Bodenplatte (9) und die Oberseite der äußeren Längsträger (12) sind gemäß Figur 7 und 8 vorzugsweise im Wesentlichen auf gleicher Höhe angeordnet. Der Plattenrand (10) und die Stufe (21) sind vorzugsweise rund nach unten abgebogen und verlaufen im Bereich der Aufnahmenut (28) parallel und dicht aneinander. Hierdurch werden ein fast fugenfreier Übergang zwischen den äußeren Längsträgern (12) und der Bodenplatte (9) sowie eine im Wesentlichen ebene Ladefläche gebildet. Durch den an der Oberseite bündigen Anschluss der Bodenplatte (9) und der äußeren Längsträger (12) werden Stoßkanten oder andere Hindernisse vermieden.

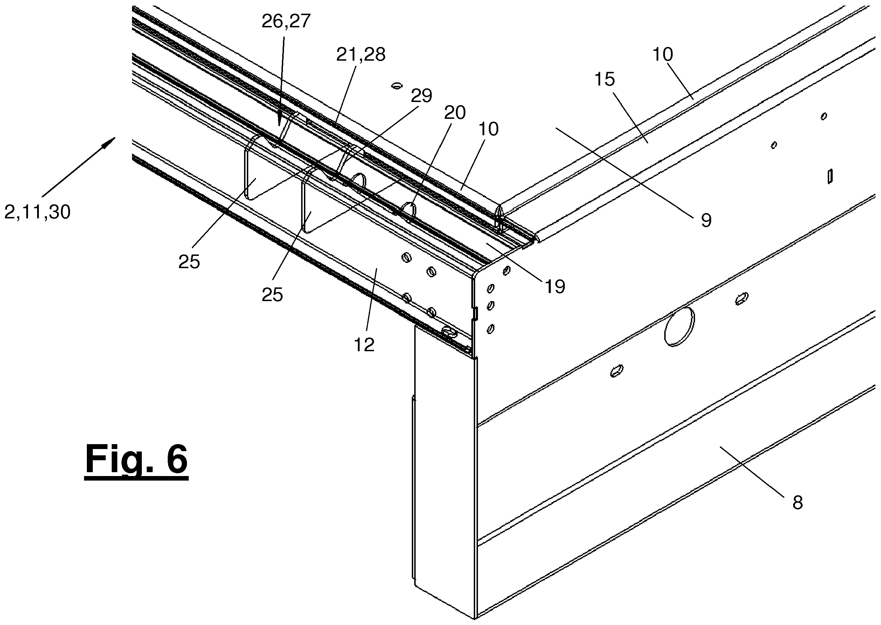

Der Plattenrand (10) ist zumindest an den Längsrändern der Bodenplatte (9) vorhanden. Vorzugsweise befindet er sich auch an deren Querrändern. Wie Figur 6 ausschnittsweise verdeutlicht, kann der Plattenrand (10) an der Bodenplatte (9) umlaufend unter Aussparung der Eckbereiche angeordnet sein.

Die äußeren Querträger (15) können ebenfalls eine im Wesentlichen ebene Oberseite aufweisen, die vorzugsweise auf gleicher Höhe wie die Oberseite der Bodenplatte (9) liegt. Die äußeren Querträger (15) können am inneren Randbereich einen abgewinkelte Stützflansch (35) für die Bodenplatte (9) aufweisen. Dieser kann eine nach unten gerichtete Stufe und einen zur Innenseite abgebogenen Flansch aufweisen. Die Ausbildung kann die gleiche wie bei den äußeren Längsträgern (12) sein. Die quer zur Längsachse (34) ausgerichteten Plattenränder (10) können an den Stützflansch (35) der äußeren Querträger (15) dicht anschließen und hier ggf. auch untergriffen bzw. abgestützt sein. Figur 10 zeigt diese Anordnung.

Die Rahmenträger (12-17) bestehen vorzugsweise aus Metall, insbesondere aus Stahl oder Leichtmetall. Die inneren Längsträger (13) können eine umfangseitig geschlossene Rohrform aufweisen. Sie können im Falle einer Kippbrücke (2) am hinteren Ende die Lagerstelle für das Kipplager (32) aufweisen. Der in Fahrtrichtung vordere äußere Querträger (15) kann im Querschnitt im Wesentlichen L-förmig ausgebildet sein. Der hintere Querträger (15) hat ebenfalls im oberen Bereich eine L-Form und kann im unteren Bereich in eine kastenartige Heckschürze (8) übergehen.

Abwandlungen der gezeigten und beschriebenen Ausführungsformen sind in verschiedener Weise möglich. Insbesondere können die Merkmale der verschiedenen Ausführungsbeispiele beiliebig miteinander kombiniert, insbesondere vertauscht werden.

Die Zuordnung von Längs- und Querträgern für die Trag- und Führungsfunktion der Bodenplatte (9) kann vertauscht sein. Hierbei kann die Bodenplatte (9) auf inneren Längsträgern aufliegen und an deren Enden in der vorbeschriebenen Weise über Aufnahmenuten geführt sein. Diese Längsträger können auf Querträgern aufliegen oder mit diesen auf gleicher Höhe gekreuzt sein.

Im gezeigten Ausführungsbeispiel tragen nur die längeren inneren Querträger (16) an den Endbereichen (26) eine Ausklinkung (27) und sind mit den äußeren Längsträgern (12) verbunden. Die kürzeren Querträger (17) enden an den inneren Längsträgern (13). Sie dienen vor allem zur Verstärkung des Innenrahmens (31) und können ebenfalls mit der Bodenplatte (9) verbunden, insbesondere vernietet sein. Alternativ können die kürzeren Querträger (17) entfallen oder in der Zahl reduziert werden, wobei sie durch längere Querträger (16) ersetzt werden.

Ferner kann die Formgebung von ein oder mehreren Rahmenträgern (12-18) abgewandelt werden. Sie kann z.B. als geschlossenes Rohre mit beliebiger Querschnittsgeometrie, als abgekantetes Stegprofil oder in anderer Weise ausgebildet sein. Bei den gezeigten U-Profilen kann der Mittelsteg (24) bis zum Trägerende reichen. Die Aufnahmenuten (28) bzw. die Ausklinkungen (27) können bei den genannten anderen Trägergeometrien in entsprechend anderer Weise ausgebildet und angeordnet sein, z.B. als Ausnehmung in einer geschlossenen Trägerwandung.

Ferner kann auf eine profilierte Stützkontur (29) verzichtet werden. Die Rahmenträger (12-18) können dabei in anderer Weise gegenseitig zugeordnet und miteinander verbunden sein.

In einer weiteren Abwandlung kann die Aufnahmenut (28) entfallen, wobei die Ausklinkung (27) nur eine profilierte Stützkontur (29) für die Zuordnung und Verbindung von Rahmenträgern (12-18) aufweist. In diesem Fall kann eine anders geformte, insbesondere ebene oder als Hohlprofil ausgebildete, Bodenplatte (9) auf andere Weise mit ein oder mehreren Rahmenträgern (12-18) verbunden sein.

### BEZUGSZEICHENLISTE

- 1: Fahrzeug, Anhänger
- 2: Ladebrücke, Kippbrücke
- 3: Fahrgestell, Chassis
- 4: Fahrwerk
- 5: Zugeinrichtung
- 6: Kippeinrichtung
- 7: Bordwand, Aufbauwand
- 8: Heckschürze
- 9: Bodenplatte
- 10: Plattenrand, Randflansch
- 11: Brückenrahmen, Leiterrahmen
- 12: Rahmenträger, Längsträger außen
- 13: Rahmenträger, Längsträger innen lang
- 14: Rahmenträger, Längsträger innen kurz
- 15: Rahmenträger, Querträger außen
- 16: Rahmenträger, Querträger innen lang
- 17: Rahmenträger, Querträger innen kurz
- 18: Rahmenträger, Längsträgerprofil, Querschnittsprofil
- 19: V-Nut
- 20: Zurröffnung
- 21: Stufe
- 22: Flansch
- 23: Querträgerprofil, Querschnittsprofil
- 24: Mittelsteg
- 25: Seitensteg
- 26: Endbereich
- 27: Ausklinkung
- 28: Aufnahmenut
- 29: Stützkontur
- 30: Außenrahmen
- 31: Innenrahmen
- 32: Kipplager
- 33: Brückenführung
- 34: Längsachse
- 35: Stützflansch

## Patentansprüche

1. Ladebrücke für Fahrzeuge (1), insbesondere Anhänger, mit einem, mehrere miteinander verbundene Rahmenträger (12-17) aufweisenden Brückenrahmen (11) und einer Bodenplatte (9), **dadurch gekennzeichnet, dass** die Bodenplatte (9) einen nach unten abgewinkelten, vorzugsweise abgebogenen, Plattenrand (10) aufweist, wobei sie auf mehreren Rahmenträgern (12-17) gestützt aufliegt und mit ihrem Plattenrand (10) an Rahmenträgern (12-17) formschlüssig geführt ist.

2. Ladebrücke nach Anspruch 1, **dadurch gekennzeichnet, dass** der Plattenrand (10) in einer Aufnahmenut (28) an der Oberseite von Rahmenträgern (16,17) formschlüssig geführt ist.

3. Ladebrücke nach Anspruch 1 oder 2, **dadurch gekennzeichnet, dass** die Bodenplatte (9) auf quer zur Längsachse (34) gerichteten Rahmenträgern (16,17) aufliegt und an zumindest einem Teil von diesen formschlüssig geführt ist.

4. Ladebrücke nach Anspruch 1, 2 oder 3, **dadurch gekennzeichnet, dass** der Brückenrahmen (11) mehrere innere, stützende Rahmenträger (16), insbesondere Querträger, beinhaltet, die an der Oberseite eine Aufnahmenut (28) für den längs gerichteten Plattenrand (10) aufweisen.

5. Ladebrücke nach Anspruch 4 **dadurch gekennzeichnet, dass** mehrere innere, stützende Rahmenträger (16), insbesondere Querträger, an einem über den Plattenrand (10) hinausreichenden Endbereich (26) einen äußeren, insbesondere längs gerichteten Rahmenträger (12) abstützen und eine profilierte und an den Rahmenträger (12) angepasste profilierte Stützkontur (29) aufweisen.

6. Ladebrücke nach Anspruch 4 oder 5, **dadurch gekennzeichnet, dass** mehrere innere, stützende Rahmenträger (16), insbesondere Querträger, einen über den Plattenrand (10) hinausreichenden Endbereich (26) mit einer Ausklinkung (27) an der Trägeroberseite aufweisen.

7. Ladebrücke nach Anspruch 5 und 6, **dadurch gekennzeichnet, dass** die Aufnahmenut (28) und ggf. die profilierte Stützkontur (29) an der Ausklinkung (27) angeordnet ist/sind.

8. Ladebrücke nach Anspruch 7 oder Ansprüchen 5 und 6, **dadurch gekennzeichnet, dass** mehrere innere, stützende Rahmenträger (16,17), insbesondere Querträger, ein umgedrehtes U-förmiges Querschnittsprofil (23) mit Seitenstegen (25) und einem oben liegenden Mittelsteg (24) aufweisen, wobei der Mittelsteg (24) an der Ausklinkung (27) endet und wobei die Aufnahmenut (28) und/oder die Stützkontur (29) an der Oberseite der Seitenstege (25) angeordnet ist/sind.

9. Ladebrücke nach einem der vorhergehenden Ansprüche, **dadurch gekennzeichnet, dass** äußere, insbesondere längs gerichtete, Rahmenträger (12) ein mehrfach abgewinkeltes schalenförmiges und seitlich offenes Querschnittsprofil (18) aufweisen.

10. Ladebrücke nach einem der vorhergehenden Ansprüche, **dadurch gekennzeichnet, dass** äußere, insbesondere längs gerichtete Rahmenträger (12) an der zur Bodenplatte (9) gerichteten Seite eine abgebogene Stufe (21) aufweisen, die im Bereich der Aufnahmenut (28) angeordnet ist und an den Plattenrand (10) angrenzt.

11. Ladebrücke nach Anspruch 10, **dadurch gekennzeichnet, dass** die Aufnahmenut (28) den Plattenrand (10) und die Stufe (21) aufnimmt und vorzugsweise führt.

12. Ladebrücke nach einem der vorhergehenden Ansprüche, **dadurch gekennzeichnet, dass** die Ladebrücke (2) als Kippbrücke ausgebildet ist, wobei am Brückenrahmen (11) ein Kipplager (32) angeordnet ist.

13. Fahrzeug, insbesondere Anhänger, mit einer Ladebrücke (2), **dadurch gekennzeichnet, dass** die Ladebrücke (2) nach mindestens einem der Ansprüche 1 bis 12 ausgebildet ist.

14. Fahrzeug nach Anspruch 13, **dadurch gekennzeichnet, dass** das Fahrzeug (1) als Anhänger ausgebildet ist.

15. Fahrzeug nach Anspruch 13 oder 14, **dadurch gekennzeichnet, dass** das Fahrzeug (1) eine Kippeinrichtung (6) für die Ladebrücke (2) aufweist.

## Claims

1. Loading bridge for vehicles (1), in particular trailers, with a bridge frame (11) having a plurality of interconnected frame members (12-17) and with a baseplate (9), **characterized in that** the baseplate (9) has a downwardly angled, preferably bent, plate edge (10), wherein the baseplate rests in a manner supported on a plurality of frame members (12-17) and is guided by its plate edge (10) in a form-fitting manner on frame members (12-17).

2. Loading bridge according to Claim 1, **characterized in that** the plate edge (10) is guided in a form-fitting manner in a receiving groove (28) on the upper side of frame members (16, 17).

3. Loading bridge according to Claim 1 or 2, **characterized in that** the baseplate (9) rests on frame members (16, 17) directly transversely with respect to the longitudinal axis (34) and is guided in a form-fitting manner on at least some of said frame members.

4. Loading bridge according to Claim 1, 2 or 3, **characterized in that** the bridge frame (11) includes a plurality of inner supporting frame members (16), in particular crossmembers, which, on the upper side, have a receiving groove (28) for the longitudinally directed plate edge (10).

5. Loading bridge according to Claim 4, **characterized in that** a plurality of inner supporting frame members (16), in particular crossmembers, support an outer, in particular longitudinally directed frame member (12), at an edge region (26) reaching over the plate edge (10) and have a profiled supporting contour (29) matched to the frame member (12).

6. Loading bridge according to Claim 4 or 5, **characterized in that** a plurality of inner supporting frame members (16), in particular crossmembers, has an end region (26) which reaches over the plate edge (10) and has a notch (27) on the upper side of the member.

7. Loading bridge according to Claims 5 and 6, **characterized in that** the receiving groove (28) and optionally the profiled supporting contour (29) is/are arranged on the notch (27).

8. Loading bridge according to Claim 7 or Claims 5 and 6, **characterized in that** a plurality of inner supporting frame members (16, 17), in particular crossmembers, have an inverted U-shaped cross-sectional profile (23) with side webs (25) and an upper central web (24), wherein the central web (24) ends at the notch (27), and wherein the receiving groove (28) and/or the supporting contour (29) is/are arranged on the upper side of the side webs (25).

9. Loading bridge according to one of the preceding claims, **characterized in that** outer, in particular longitudinally directed, frame members (12) have a multiply angled, shell-shaped and laterally open cross-sectional profile (18).

10. Loading bridge according to one of the preceding claims, **characterized in that** outer, in particular longitudinally directed frame members (12) have, on the side directed towards the baseplate (9), a bent step (21) which is arranged in the region of the receiving groove (28) and is adjacent to the plate edge (10).

11. Loading bridge according to Claim 10, **characterized in that** the receiving groove (28) receives and preferably guides the plate edge (10) and the step (21).

12. Loading bridge according to one of the preceding claims, **characterized in that** the loading bridge (2) is designed as a tipping bridge, wherein a tipping bearing (32) is arranged on the bridge frame (11).

13. Vehicle, in particular trailer, with a loading bridge (2), **characterized in that** the loading bridge (2) is designed according to at least one of Claims 1 to 12.

14. Vehicle according to Claim 13, **characterized in that** the vehicle (1) is designed as a trailer.

15. Vehicle according to Claim 13 or 14, **characterized in that** the vehicle (1) has a tipping device (6) for the loading bridge (2).

## Revendications

1. Plateforme de chargement pour véhicules (1), notamment remorques, comprenant un châssis de plateforme (11) possédant plusieurs éléments porteurs de châssis (12 à 17) reliés les uns aux autres et une plaque de fond (9), **caractérisée en ce que** la plaque de fond (9) possède un bord de plaque (10) coudé vers le bas, de préférence cintré, celle-ci reposant avec soutien sur plusieurs éléments porteurs de châssis (12 à 17) et étant guidée par complémentarité de formes au niveau des éléments porteurs de châssis (12 à 17) par son bord de plaque (10).

2. Plateforme de chargement selon la revendication 1, **caractérisée en ce que** le bord de plaque (10) est guidé par complémentarité de formes dans une rainure d'accueil (28) au niveau du côté supérieur d'éléments porteurs de châssis (16, 17).

3. Plateforme de chargement selon la revendication 1 ou 2, **caractérisée en ce que** la plaque de fond (9) repose sur des éléments porteurs de châssis (16, 17) orientés transversalement par rapport à l'axe longitudinal (34) et elle est guidée par complémentarité de formes au niveau d'au moins une partie de ceux-ci.

4. Plateforme de chargement selon la revendication 1, 2 ou 3, **caractérisée en ce que** le châssis de plateforme (11) contient plusieurs éléments porteurs de châssis (16) de soutien intérieurs, notamment des traverses, qui possèdent au niveau du côté supérieur une rainure d'accueil (28) pour le bord de plaque (10) orienté longitudinalement.

5. Plateforme de chargement selon la revendication 4, **caractérisée en ce que** plusieurs éléments porteurs de châssis (16) de soutien intérieurs, notamment des traverses, au niveau d'une zone d'extrémité (26) s'étendant au-delà du bord de plaque (10), soutiennent un élément porteur de châssis (12) extérieur, notamment orienté longitudinalement, et présentent un contour d'appui (29) profilé et avec un profilage adapté à l'élément porteur de châssis (12).

6. Plateforme de chargement selon la revendication 4 ou 5, **caractérisée en ce que** plusieurs éléments porteurs de châssis (16) de soutien intérieurs, notamment des traverses, possèdent une zone d'extrémité (26) qui s'étend au-delà du bord de plaque (10) et est pourvue d'une mortaise (27) au niveau du côté supérieur de l'élément porteur.

7. Plateforme de chargement selon la revendication 5 ou 6, **caractérisée en ce que** la rainure d'accueil (28) et éventuellement le contour d'appui (29) profilé est/sont disposé(s) au niveau de la mortaise (27).

8. Plateforme de chargement selon la revendication 7 ou les revendications 5 et 6, **caractérisée en ce que** plusieurs éléments porteurs de châssis (16, 17) de soutien intérieurs, notamment des traverses, possèdent un profil de section transversale (23) en forme de U retourné avec des montants latéraux (25) et un élément jointif central (24) se trouvant en haut, l'élément jointif central (24) se terminant au niveau de la mortaise (27) et la rainure d'accueil (28) et/ou le contour d'appui (29) étant disposé (s) au niveau du côté supérieur des montants latéraux (25).

9. Plateforme de chargement selon l'une des revendications précédentes, **caractérisée en ce que** des éléments porteurs de châssis (12) extérieurs, notamment orientés longitudinalement, possèdent un profil de section transversale (18) plusieurs fois cintré en forme de coque et ouvert latéralement.

10. Plateforme de chargement selon l'une des revendications précédentes, **caractérisée en ce que** des éléments porteurs de châssis (12) extérieurs, notamment orientés longitudinalement, possèdent, au niveau du côté orienté vers la plaque de fond (9), un gradin (21) cintré qui est disposé dans la zone de la rainure d'accueil (28) et est adjacent au bord de plaque (10).

11. Plateforme de chargement selon la revendication 10, **caractérisée en ce que** la rainure d'accueil (28) accueille le bord de plaque (10) et le gradin (21) et de préférence les guide.

12. Plateforme de chargement selon l'une des revendications précédentes, **caractérisée en ce que** la plateforme de chargement (2) est réalisée sous la forme d'une plateforme basculante, un palier à bascule (32) étant disposé au niveau du châssis de plateforme (11).

13. Véhicule, notamment remorque, équipé d'une plateforme de chargement (2), **caractérisé en ce que** la plateforme de chargement (2) est configurée selon au moins l'une des revendications 1 à 12.

14. Véhicule selon la revendication 13, **caractérisé en ce que** le véhicule (1) est réalisé sous la forme d'une remorque.

15. Véhicule selon la revendication 13 ou 14, **caractérisé en ce que** le véhicule (1) possède un dispositif de basculement (6) pour la plateforme de chargement (2).
